# FASCICULE DE BREVET EUROPEEN

(11) **EP 1 576 476 B1**
(45) Date de publication et mention de la délivrance du brevet: **29.08.2007**
(21) Numéro de dépôt: 02788058.2
(22) Date de dépôt: 14.11.2002
(51) Int. Cl.: G06F 11/36

(54) **CIRCUIT DE SURVEILLANCE D'UN MICROPROCESSEUR ET OUTIL D'ANALYSE ET SES ENTREES/SORTIES**
ÜBERWACHUNGSCHALTUNG EINES MIKROPROZESSORS UND ANALYSEWERKZEUG UND SEINE EIN- UND AUSGÄNGE
CIRCUIT FOR MONITORING A MICROPROCESSOR AND ANALYSIS TOOL AND INPUTS/OUTPUTS THEREOF

(43) Date de publication de la demande: 21.09.2005
(73) Titulaire: STMicroelectronics S.A., 92120 Montrouge (FR)
(72) Inventeur: ROBERT, Catherine, F-38950 Quaix en Chartreuse (FR); ROBERT, Xavier, F-38450 Saint Georges de Commiers (FR); BARBIERO, Jehan-Philippe, F-38220 Vizille (FR)
(74) Mandataire: de Beaumont, Michel
(86) Numéro de dépôt international: PCT/FR2002/003909
(87) Numéro de publication internationale: WO 2004/046928

(56) Documents cités:
- US-A- 5 974 573
- US-A- 6 052 774
- THE NEXUS 5001 FORUM: "Standard for a Global Embedded Processor Debug Interface" , IEEE-ISTO 5001TM-1999, PAGE(S) 1-159 XP002247195 cité dans la demande page 1 page 57, ligne 5 page 104, ligne 1-3 page 133, ligne 7-14 page 134, ligne 16-20

## Description

La présente invention concerne le test de microprocesseurs. Elle concerne plus particulièrement un procédé et un dispositif de transmission de données numériques entre un circuit de surveillance intégré dans une puce de microprocesseur et un outil d'analyse.

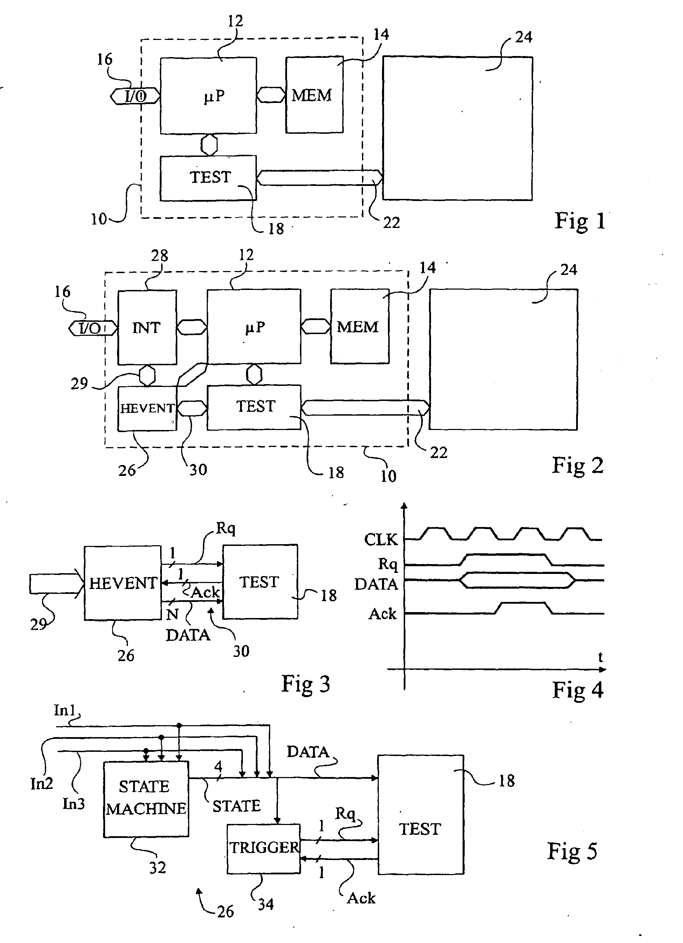

La figure 1 représente de façon schématique un circuit intégré 10 comportant un microprocesseur (µP) 12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18 (TEST). Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et est relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

Ainsi, la norme IEEE-ISTO-5001 en préparation propose dans sa version de 1999, accessible par exemple sur le site www.ieee-isto.org/Nexus5001, un protocole particulier d'échanges de messages entre un circuit de surveillance et un outil d'analyse pour un circuit de surveillance 18 ne nécessitant qu'un nombre réduit de bornes de test 22.

Parmi les messages fournis par le circuit de surveillance 18 selon la norme IEEE-ISTO-5001, un message indique par exemple qu'un saut a eu lieu lors du déroulement du programme exécuté par le microprocesseur 12. Un autre message peut indiquer le fait que le microprocesseur 12 exécute une opération de lecture ou d'écriture, par exemple une opération de lecture ou d'écriture d'une donnée dans une zone de la mémoire 14. A partir des messages transmis par le circuit de surveillance 18, l'outil d'analyse 24 reconstitue la séquence d'instructions exécutée par le microprocesseur 12. La séquence d'instructions reconstituée peut alors être comparée à une séquence d'instructions théoriquement exécutée par le microprocesseur 12 de façon à déterminer des dysfonctionnements du microprocesseur 12.

Il y a toutefois certains événements qui ne correspondent pas à des instructions particulières du programme exécuté par le microprocesseur 12 ou qui n'entraînent pas de modifications dans l'exécution du programme par le microprocesseur 12. Il s'agit, par exemple, dans le cas d'une application en téléphonie mobile, de l'extinction automatique d'un écran d'un téléphone portable commandée par un signal de contrôle spécifique qui n'est pas fourni par le microprocesseur 12 du téléphone portable. De tels événements ne sont généralement pas décelés par le circuit de surveillance 18 et n'entraînent donc pas la transmission de messages par le circuit de surveillance 18 à l'outil d'analyse 24. Il s'agit également par exemple de signaux particuliers produits par les circuits internes du microprocesseur 12.

Il serait souhaitable que l'outil d'analyse 24 puisse indiquer à l'utilisateur que de tels événements ont eu lieu. En effet, de tels événements peuvent apporter une aide lors du diagnostic de dysfonctionnements du microprocesseur 12.

La présente invention vise à obtenir un dispositif et un procédé de transmission de messages entre un circuit de test et un outil d'analyse permettant la transmission de messages représentatifs d'événements qui ne sont pas liés à l'exécution du programme par le microprocesseur.

La présente invention vise en outre à obtenir un dispositif et un procédé de transmission de messages qui entraînent le moins de modifications possible du circuit de surveillance prévu par la norme IEEE-ISTO-5001.

Dans ce but, elle prévoit un procédé de transmission de messages numériques par des bornes de sortie d'un circuit de surveillance intégré à un microprocesseur, des messages numériques étant représentatifs de premiers événements spécifiques dépendant de l'exécution d'une suite d'instructions par le microprocesseur, comprenant les étapes consistant à transmettre au circuit de surveillance par des accès dédiés un signal de requête pour l'envoi d'un message associé à un événement spécifique parmi des seconds événements spécifiques indépendants de l'exécution de la suite d'instructions par le microprocesseur et un signal de données caractéristiques associées audit événement spécifique ; amener le circuit de surveillance à lire ledit message de requête et, si des conditions de gestion de ressources sont remplies, à émettre par un accès dédié un message d'accusé de réception et à mémoriser ledit signal de données caractéristiques ; et transmettre un message numérique représentatif du signal de données caractéristiques mémorisé.

Selon un mode de réalisation de l'invention, les conditions de gestion de ressources sont remplies lorsque le circuit de surveillance n'est pas en train de transmettre des messages représentatifs des premiers événements spécifiques.

Selon un mode de réalisation de l'invention, le message numérique représentatif du signal de données mémorisé comprend un identifiant et le signal de données caractéristiques.

Selon un mode de réalisation de l'invention, le signal de données caractéristiques correspond aux valeurs sur des bornes d'entrée du microprocesseur.

La présente invention prévoit également un dispositif de transmission de messages numériques entre un circuit de surveillance intégré à un microprocesseur et un outil d'analyse, des premiers messages numériques étant représentatifs de premiers événements spécifiques dépendant de l'exécution d'une suite d'instructions par le microprocesseur. Le dispositif comporte un moyen de détection d'un événement spécifique parmi des seconds événements spécifiques indépendants de l'exécution de la suite d'instructions par le microprocesseur ; un moyen d'émission de requête pour transmettre au circuit de surveillance, lorsqu'un événement spécifique est détecté, un signal de requête et un signal de données caractéristiques associé audit événement spécifique. De plus, le circuit de surveillance comprend un moyen de mémorisation du signal de données caractéristiques fourni par le moyen d'émission de requête, un moyen pour transmettre au moyen d'émission de requête un signal d'accusé de réception lorsque le signal de données caractéristiques est mémorisé, et un moyen pour transmettre un message numérique à partir dudit signal de données caractéristiques mémorisé.

Selon un mode de réalisation de l'invention, le moyen de détection, le moyen d'émission de requête, le circuit de surveillance et le microprocesseur sont intégrés dans une même puce.

Selon un mode de réalisation de l'invention, le moyen de détection est relié à des bornes d'entrée du microprocesseur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de façon très schématique l'architecture d'une puce classique intégrant un microprocesseur et un circuit de surveillance ;
la figure 2 représente, de façon très schématique, un exemple de réalisation d'architecture d'une puce selon l'invention ;
la figure 3 représente un détail de la figure 2 ;
la figure 4 représente un chronogramme de signaux caractéristiques du procédé de transmission de messages selon l'invention ; et
la figure 5 représente un mode de réalisation particulier du système de la figure 3.

La figure 2 représente un exemple de réalisation d'une puce 10 selon l'invention intégrant un circuit de requête 26 (HEVENT) et un circuit d'interface 28 (INT). Le circuit d'interface 28 est relié aux bornes d'entrée/sortie 16 et au microprocesseur 12. Le circuit d'interface 28 est adapté à mettre en forme les signaux reçus depuis les bornes d'entrée/sortie 16 pour qu'ils soient exploitables par le microprocesseur 12 et à mettre en forme les signaux fournis par le microprocesseur 12 avant leur émission hors de la puce 10.

Le circuit d'interface 28 fournit par une liaison 29 au circuit de requête 26 des signaux qui peuvent correspondre à une sélection particulière de certains des signaux des bornes d'entrée/sortie 16. Le circuit de requête 26 reçoit également des signaux directement du microprocesseur 12. De tels signaux peuvent indiquer par exemple l'exécution d'une instruction particulière par le microprocesseur 12. Finalement, le circuit de requête 26 échange des signaux avec le circuit de surveillance 18 par une liaison 30.

Selon une variante de l'invention, le circuit d'interface 28 n'est pas intégré à la puce 10. Le circuit de requête 26 est alors directement connecté à certaines des bornes d'entrée/sortie 16.

La figure 3 représente un exemple plus détaillé des signaux échangés sur la liaison 30 entre le circuit de requête 26 et le circuit de surveillance 18. Selon le présent exemple de réalisation, le circuit de requête 26 est adapté à transmettre au circuit de surveillance 18 un signal de requête Rq sur une première ligne à un bit et un signal de données binaires DATA sur N lignes à 1 bit formant un bus de données. A titre d'exemple, le circuit de requête 26 peut émettre, sur chacune des lignes constituant le bus de données, un signal présent sur l'une des bornes d'entrée/sortie 16. Le signal de données DATA peut également être issu d'un traitement préalable de signaux présents sur les bornes d'entrée/sortie 16 réalisé par le circuit d'interface 28. A titre d'exemple, certains bits du signal DATA peuvent correspondre à un identifiant particulier, tandis que les autres bits du message DATA peuvent correspondre à certains des signaux reçus par les bornes d'entrée/sortie 16. De façon générale, les bits de poids le plus fort du signal DATA ne sont pas transmis lorsqu'ils sont nuls de façon à réduire la quantité de données échangée.

Le circuit de surveillance 18 est adapté à transmettre à l'outil d'analyse 24 un message à partir du signal de données DATA. Le message peut comprendre un identifiant, indiquant que le message est relatif à la survenue d'un événement qui n'est pas lié à l'exécution du programme par le microprocesseur 12, et le signal de données DATA. Le circuit de surveillance 18 est adapté à transmettre au circuit de requête 26 un signal d'accusé de réception Ack sur une seconde ligne à un bit.

La figure 4 représente un chronogramme des signaux échangés entre le circuit de requête 26 et le circuit de surveillance 18 selon l'exemple de réalisation de la figure 3. Le circuit de requête 26 reçoit un signal d'horloge CLK qui est également fourni au microprocesseur 12 et au circuit de surveillance 18. Lorsque le circuit de requête 26 reçoit des signaux du circuit d'interface 28 indiquant qu'il s'est produit un événement pour lequel le circuit de surveillance 18 doit transmettre un message à l'outil d'analyse 24, le circuit de requête 26 met à l'état haut le signal de requête Rq et maintient stable sur le bus de données une valeur spécifique du signal de données DATA associée à l'événement. Le circuit de surveillance 18 échantillonne à la fréquence d'horloge CLK le signal de requête Rq et le signal de données DATA sur le bus de données. Lorsqu'un état haut du signal de requête Rq est détecté, le circuit de surveillance 18 est prévenu qu'il doit transmettre un message en relation avec la valeur du signal de données DATA présentes sur le bus de données. La mémorisation du signal de données DATA par le circuit de surveillance 18 est réalisée au même cycle d'horloge que la détection de l'état haut du signal de requête Rq ou à un cycle d'horloge ultérieur selon la charge de travail du circuit de surveillance 18. Lorsque la mémorisation est effectuée, le circuit de surveillance 18 met à l'état haut le signal d'accusé de réception Ack. Lorsqu'au cycle d'horloge suivant, le circuit de requête 26 échantillonne le signal d'accusé de réception Ack à l'état haut, le circuit de requête 26 met à l'état bas le signal de requête Rq et cesse le maintien de la valeur spécifique du signal de données DATA sur le bus de données. Le circuit de requête peut alors, à un cycle d'horloge ultérieur, mettre à nouveau le signal de requête Rq à l'état haut si un événement correspondant à un message à émettre par le circuit de surveillance 18 se produit.

L'utilisation de signaux de requête Rq et d'accusé de réception Ack permet d'éviter que les messages supplémentaires, associés à des événements qui ne sont pas liés à l'exécution du programme par le microprocesseur 12, à transmettre par le circuit de surveillance 18 ne modifient le fonctionnement normal du circuit de surveillance. En effet, tant que le circuit de surveillance 18 est occupé à transmettre à l'outil d'analyse 24 des messages déterminés à partir de données fournies par le microprocesseur 12, notamment selon la norme IEEE-ISTO-5001, il ne transmet pas de signal d'accusé de réception Ack au circuit de requête 26 même si le signal de requête est au niveau haut. Le circuit de requête 26 maintient alors la valeur du signal de données DATA présentes sur le bus de données. Le circuit de requête 26 peut comprendre une zone de mémoire tampon dans laquelle plusieurs données DATA à transmettre au circuit de surveillance 18 peuvent être stockées tant que le circuit de surveillance 18 n'est pas disponible. Etant donné que, de façon générale, le circuit de requête 26 ne transmet de nouvelles valeurs du signal de données DATA au circuit de surveillance 18 qu'à une faible fréquence par rapport à la fréquence d'émission de messages par le circuit de surveillance 18, la taille d'une telle zone mémoire tampon peut être relativement réduite.

La figure 5 représente un exemple de réalisation plus détaillé du circuit de requête 26 des figures 2 et 3.

Le circuit de requête 26, selon cet exemple de réalisation, comprend une machine d'états 32 (STATE MACHINE) recevant des données d'entrée In1, In2, In3, fournies par exemple par le circuit d'interface 28. A titre d'exemple, trois entrées sont représentées. La machine d'états 32 fournit au circuit de surveillance 18 un signal d'état STATE comportant par exemple quatre bits. A ces quatre bits sont ajoutées les valeurs des trois entrées In1, In2, In3 pour former le signal d'état DATA transmis au circuit de surveillance 18. Le signal de données DATA est également fourni à un circuit logique 34 (TRIGGER) qui est adapté à transmettre au circuit de surveillance 18 le signal de requête Rq et recevoir du circuit de surveillance 18 le signal d'accusé de réception Ack.

Le circuit logique 34 fournit un signal de requête Rq seulement pour des signaux d'états STATE spécifiques parmi l'ensemble des signaux d'états pouvant être fournis par la machine d'états 32. La valeur du signal de données DATA est donc lue par le circuit de surveillance 18 uniquement lorsque le signal d'état STATE est égal à l'une des valeurs spécifiques de signal d'état.

Le circuit logique 34 peut être programmable de façon à pouvoir modifier les valeurs spécifiques de signaux d'états STATE de la machine d'états 32 pour lesquelles un signal de requête Rq est transmis au circuit de surveillance 18. A titre d'exemple, des registres de configuration du circuit logique 34 peuvent être programmés par l'outil d'analyse 24 par l'intermédiaire du circuit de surveillance 18.

La présente invention présente de nombreux avantages :
Premièrement, elle permet la prise en compte par le circuit de surveillance de données pour la transmission à l'outil d'analyse de messages caractéristiques d'événements qui ne sont pas liés au fonctionnement du microprocesseur.
Deuxièmement, elle permet de modifier le moins possible la structure du circuit de surveillance prévue par la norme IEEE-ISTO-5001.
Troisièmement, l'utilisation de signaux de requête et d'accusé de réception permet au circuit de test de ne traiter les données fournies par le circuit de requête seulement lorsqu'il a transmis tous les messages définis à partir de données transmises directement par le microprocesseur.
Quatrièmement, dans le cas où le circuit de surveillance a une activité trop importante pour transmettre à l'outil d'analyse des messages à partir des signaux de données fournies par le circuit de la requête, le circuit de requête peut éventuellement stocker les valeurs des signaux de données.

Bien entendu, la présente invention est susceptible de diverses variantes et modifications qui apparaîtront à l'homme de l'art. Par exemple, le circuit de requête peut ne pas être intégré à la puce comportant le microprocesseur et le circuit de surveillance. Le circuit de surveillance est alors relié par des bornes dédiées au circuit de requête réalisé hors de la puce.

## Revendications

1. Procédé de transmission de messages numériques par des bornes de sortie (22) d'un circuit de surveillance (18) intégré à un microprocesseur (12), des messages numériques étant représentatifs de premiers événements spécifiques dépendant de l'exécution d'une suite d'instructions par le microprocesseur, **caractérisé en ce qu'**il comprend les étapes suivantes :
- transmettre au circuit de surveillance par des accès dédiés un signal de requête (Rq) pour l'envoi d'un message associé à un événement spécifique parmi des seconds événements spécifiques indépendants de l'exécution de la suite d'instructions par le microprocesseur et un signal de données caractéristiques (DATA) associées audit événement spécifique ;
- amener le circuit de surveillance à lire ledit message de requête et, si des conditions de gestion de ressources sont remplies, à émettre par un accès dédié un message d'accusé de réception (Ack) et à mémoriser ledit signal de données caractéristiques ; et
- transmettre un message numérique représentatif du signal de données caractéristiques mémorisé.

2. Procédé selon la revendication 1, dans lequel les conditions de gestion de ressources sont remplies lorsque le circuit de surveillance (18) n'est pas en train de transmettre des messages représentatifs des premiers événements spécifiques.

3. Procédé selon la revendication 1, dans lequel le message numérique représentatif du signal de données mémorisé comprend un identifiant et le signal de données caractéristiques (DATA).

4. Procédé selon la revendication 1, dans lequel le signal de données caractéristiques (DATA) correspond aux valeurs sur des bornes d'entrée (16) du microprocesseur (12).

5. Dispositif de transmission de messages numériques entre un circuit de surveillance (18) intégré à un microprocesseur (12) et un outil d'analyse (24), des premiers messages numériques étant représentatifs de premiers événements spécifiques dépendant de l'exécution d'une suite d'instructions par le microprocesseur, **caractérisé en ce qu'**il comporte :
un moyen de détection (26) d'un événement spécifique parmi des seconds événements spécifiques indépendants de l'exécution de la suite d'instructions par le microprocesseur ;
un moyen d'émission de requête (26, 34) pour transmettre au circuit de surveillance, lorsqu'un événement spécifique est détecté, un signal de requête (Rq) et un signal de données caractéristiques (DATA) associé audit événement spécifique,
et **en ce que** le circuit de surveillance comprend un moyen de mémorisation du signal de données caractéristiques fourni par le moyen d'émission de requête, un moyen pour transmettre au moyen d'émission de requête un signal d'accusé de réception (Ack) lorsque le signal de données caractéristiques est mémorisé, et un moyen pour transmettre un message numérique à partir dudit signal de données caractéristiques mémorisé.

6. Dispositif selon la revendication 5, dans lequel le moyen de détection (26), le moyen d'émission de requête (26, 34), le circuit de surveillance (18) et le microprocesseur (12) sont intégrés dans une même puce (10).

7. Dispositif selon la revendication 5, dans lequel le moyen de détection (26) est relié à des bornes d'entrée (16) du microprocesseur (12).

## Claims

1. A method for transmitting digital messages through output terminals (22) of a monitoring circuit (18) integrated to a microprocessor (12), the digital messages being representative of first specific events depending on the execution of an instruction sequence by the microprocessor, **characterized in that** it comprises the steps of:
- transmitting to the monitoring circuit through dedicated accesses a request signal (Rq) for the sending of a message associated with a specific event from among second specific events independent from the execution of the instruction sequence by the microprocessor and a signal of characteristic data (DATA) associated with said specific event;
- having the monitoring circuit read said request message and, if resource management conditions are fulfilled, transmitting through a dedicated access an acknowledgement message (Ack) and storing said characteristic data signal; and
- transmitting a digital message representative of the stored characteristic data signal.

2. The method of claim 1, in which the resource management conditions are fulfilled when the monitoring circuit (18) is not transmitting messages representative of the first specific events.

3. The method of claim 1, in which the digital message representative of the stored data signal comprises an identifier and the characteristic data signal (DATA).

4. The method of claim 1, in which the characteristic data (DATA) signal corresponds to the values on input terminals (16) of the microprocessor (12).

5. A device for transmitting digital messages between a monitoring circuit (18) integrated with a microprocessor (12) and an analysis tool (24), first digital messages being representative of first specific events depending on the execution of an instruction sequence by the microprocessor, **characterized in that** it comprises:
means (26) for detecting a specific event from among second specific events independent from the execution of the instruction sequence by the microprocessor;
means (26, 34) for transmitting a request for transmitting to the monitoring circuit, when a specific event is detected, a request signal (Rq) and a characteristic data signal (DATA) associated with said specific event
and **in that** the monitoring circuit comprises means for storing the characteristic data signal provided by the request transmission means, means for transmitting to the request transmission means an acknowledgement signal (Ack) when the characteristic data signal is stored, and means for transmitting a digital message from said stored characteristic data signal.

6. The device of claim 5, in which the detection means (26), the request transmission means (26, 34), the monitoring circuit (18), and the microprocessor (12) are integrated in a same chip (10).

7. The device of claim 5, in which the detection means (26) is connected to input terminals (16) of the microprocessor (12).

## Patentansprüche

1. Verfahren zur Übertragung von Digitalnachrichten durch Ausgangsanschlüsse (22) einer Überwachungsschaltung (18), integriert mit einem Mikroprozessor (12), wobei die Digitalnachrichten für erste bestimmte Ereignisse repräsentativ sind, und zwar abhängig von der Ausführung einer Befehlsfolge durch den Mikroprozessor, **dadurch gekennzeichnet, dass** das Verfahren die folgenden Schritte vorsieht:
- Übertragung zur Überwachungsschaltung durch zugeordnete bzw. gewidmete Zugänge eines Anforderungssignals (Rq) zum Senden einer Nachricht, assoziiert mit einem spezifischen oder bestimmten Ereignis aus einer Menge von zweiten bestimmten Ereignissen, unabhängig von der Ausführung der Befehlsfolge durch den Mikroprozessor und eines mit dem bestimmten Ereignis assoziierten Signals der charakteristischen Daten (DATA);
- Vorsehen, dass die Überwachungsschaltung die Anforderungsnachricht liest, und, dann wenn die Ressource-Managementbedingungen erfüllt sind, senden einer Anerkennungsnachricht (Ack) durch einen gewidmeten Zugang und Speichern des erwähnten charakteristischen Datensignals; und
- Übertragen einer Digitalnachricht repräsentativ für das gespeicherte charakteristische Datensignal.

2. Verfahren nach Anspruch 1, bei dem die Ressource-Managementbedingungen dann erfüllt sind, wenn die Überwachungsschaltung (18) keine Nachrichten überträgt, die repräsentativ für die ersten bestimmten Ereignisse sind.

3. Verfahren nach Anspruch 1, wobei die Digitalnachricht repräsentativ für das gespeicherte Datensignal einen Identifizierer und das charakteristische Datensignal (DATA) aufweist.

4. Verfahren nach Anspruch 1, wobei das Signal der charakteristischen Daten (DATA) den Werten an den Eingangsanschlüssen (16) des Mikroprozessors (12) entspricht.

5. Eine Vorrichtung zur Übertragung von Digitalnachrichten zwischen einer Überwachungsschaltung (18), integriert mit einem Mikroprozessor (12) und einem Analysewerkzeug (24), wobei erste Digitalnachrichten für erste spezielle oder spezifische Ereignisse repräsentativ sind, und zwar abhängig von der Ausführung einer Instruktions- oder Befehlsfolge durch den Mikroprozessor, **dadurch gekennzeichnet, dass** die Vorrichtung Folgendes aufweist:
Mittel (26) zum Detektieren eines spezifischen oder speziellen Ereignisses aus zweiten speziellen oder spezifischen Ereignissen, unabhängig von der Ausführung der Befehlsfolge durch den Mikroprozessor;
Mittel (26, 34) zur Übertragung einer Anforderung zur Übertragung zur Überwachungsschaltung dann, wenn ein bestimmtes Ereignis detektiert wird, und zwar eines Anforderungssignals (Rq) und eines Signals charakteristischer Daten (DATA), assoziiert mit dem bestimmten Ereignis;
und ferner **gekennzeichnet dadurch, dass** die Überwachungsschaltung Folgendes aufweist: Mittel zur Speicherung des charakteristischen Datensignals, geliefert durch die Anforderungsübertragungsmittel, Mittel zur Übertragung zu den Anforderungsübertragungsmitteln eines Anerkennungssignals (Ack) dann, wenn das charakteristische Datensignal gespeichert ist, und Mittel zur Übertragung einer Digitalnachricht von dem gespeicherten charakteristischen Datensignal.

6. Vorrichtung nach Anspruch 5, wobei die Detektionsmittel (26), die Anforderungsübertragungsmittel (26, 34), die Überwachungsschaltung (18) und der Mikroprozessor (12) in dem gleichen Chip (10) integriert sind.

7. Vorrichtung nach Anspruch 5, wobei die Detektionsmittel (26) mit Eingangsanschlüssen (16) des Mikroprozessors (12) verbunden sind.
